# EUROPEAN PATENT APPLICATION

(11) **EP 3 940 581 A1**
(43) Date of publication of application: **19.01.2022**
(21) Application number: 21173911.5
(22) Date of filing: 14.05.2021
(51) Int. Cl.: G06F 40/30, G06F 40/45, G06N 3/08

(54) **METHOD AND APPARATUS FOR TRAINING MULTILINGUAL SEMANTIC REPRESENTATION MODEL, DEVICE AND STORAGE MEDIUM**

(30) Priority: 17.07.2020 CN 202010691555
(71) Applicant: Beijing Baidu Netcom Science and Technology Co., Ltd., Beijing 100085 (CN)
(72) Inventor: OUYANG, Xuan, Beijing, 100085 (CN); WANG, Shuohuan, Beijing, 100085 (CN); SUN, Yu, Beijing, 100085 (CN)
(74) Representative: dompatent von Kreisler Selting Werner - Partnerschaft von Patent- und Rechtsanwälten mbB

(57) **Abstract**

The present disclosure discloses a method and apparatus for training a multilingual semantic representation model, an electronic device and a storage medium, and relates to the natural language processing field based on artificial intelligence. An implementation includes: training the multilingual semantic representation model using a plurality of training language materials represented in a plurality of languages respectively, such that the multilingual semantic representation model learns the semantic representation capability of each language; generating a corresponding mixed-language language material for each of the plurality of training language materials, the mixed-language language material including language materials in at least two languages; and training the multilingual semantic representation model using each mixed-language language material and the corresponding training language material, such that the multilingual semantic representation model learns semantic alignment information of different languages. With the technical solution of the present disclosure, the multilingual semantic representation model may learn the semantic alignment information among different languages, and then, semantic interaction among different languages may be realized based on the multilingual semantic representation model, with quite high practicability.

## Description

### TECHNICAL FIELD

The present disclosure relates to the computers technical field, particularly to the natural language processing field based on artificial intelligence, and more particularly to a method and apparatus for training a multilingual semantic representation model, a device and a storage medium.

### BACKGROUND

Natural language processing (NLP) is a quite important sub-domain of artificial intelligence (AI). A learning paradigm of an existing NLP task mostly adopts pre-training plus fine-tuning. A preliminary modeling operation is first performed in an unsupervised language material by pre-training a task, and then, fine adjustment is performed on a downstream task using task data. Existing experience shows that a pre-trained model may play a role in constraining regularization of model parameters, which may greatly improve the performance capability of the downstream task. Based on the above, with the continuous development of globalization, information exchange between different languages is more and more important, and in order to improve the performance of a multilingual semantic representation model on a multilingual task, modeling of the multilingual semantic representation model is especially important.

When pre-trained, the existing multilingual semantic representation model is trained separately for each language to learn the semantic representation capability of each language.

However, the existing multilingual semantic representation model is unable to learn semantic alignment information between different languages in the pre-training process, such that the multilingual semantic representation model is unable to accurately realize information interaction between different languages.

### SUMMARY

In order to solve the above-mentioned problem, the present disclosure provides a method and apparatus for training a multilingual semantic representation model, a device, a storage medium and a computer program product.

According to an aspect of the present disclosure, there is provided a method for training a multilingual semantic representation model, including:
training the multilingual semantic representation model using a plurality of training language materials represented in a plurality of languages respectively, such that the multilingual semantic representation model learns the semantic representation capability of each language;
generating a corresponding mixed-language language material for each of the plurality of training language materials, the mixed-language language material including language materials in at least two languages; and
training the multilingual semantic representation model using each mixed-language language material and the corresponding training language material, such that the multilingual semantic representation model learns semantic alignment information of different languages.

According to an aspect of the present disclosure, there is provided an apparatus for training a multilingual semantic representation model, including:
a first training module configured to train the multilingual semantic representation model using a plurality of training language materials represented in a plurality of languages respectively, such that the multilingual semantic representation model learns the semantic representation capability of each language;
a generating module configured to generate a corresponding mixed-language language material for each of the plurality of training language materials, the mixed-language language material including language materials in at least two languages; and
a second training module configured to train the multilingual semantic representation model using each mixed-language language material and the corresponding training language material, such that the multilingual semantic representation model learns semantic alignment information of different languages.

According to still another aspect of the present disclosure, there is provided an electronic device, including:
at least one processor; and
a memory connected with the at least one processor communicatively;
herein the memory stores instructions executable by the at least one processor to enable the at least one processor to carry out the method as mentioned above.

According to yet another aspect of the present disclosure there is provided a non-transitory computer readable storage medium including instructions, which, when executed by a computer, cause the computer to carry out the method as mentioned above.

According to still yet another aspect of the present disclosure, there is provided a computer program product including instructions which, when the program is executed by a computer, cause the computer to carry out the method as mentioned above.

According to the technology of the present disclosure, the multilingual semantic representation model may learn the semantic alignment information among different languages, and then, semantic interaction among different languages may be realized based on the multilingual semantic representation model, with quite high practicability.

It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present disclosure. In the drawings:
Fig. 1 is a schematic diagram according to a first embodiment of the present disclosure;
Fig. 2 is a schematic diagram according to a second embodiment of the present disclosure;
Fig. 3 is a schematic diagram of a training process according to an example;
Fig. 4 is a schematic diagram of a training process according to another example;
Fig. 5 is a schematic diagram according to a third embodiment of the present disclosure;
Fig. 6 is a schematic diagram according to a fourth embodiment of the present disclosure; and
Fig. 7 is a block diagram of an electronic device configured to implement the above-mentioned method according to an embodiment of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and structures are omitted in the descriptions below.

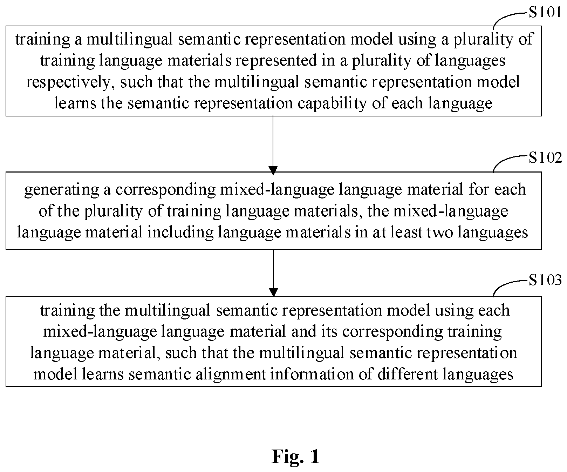

Fig. 1 is a schematic diagram according to a first embodiment of the present disclosure; as shown in Fig. 1, this embodiment provides a method for training a multilingual semantic representation model, which may include the following steps:
S101: training the multilingual semantic representation model using a plurality of training language materials represented in a plurality of languages respectively, such that the multilingual semantic representation model learns the semantic representation capability of each language.

An apparatus for training a multilingual semantic representation model serves as a subject for executing the method for training a multilingual semantic representation model according to this embodiment, and may be configured as an entity electronic device, such as a computer, or as an application integrated with software, which runs on the computer in use, so as to train the multilingual semantic representation model.

The multilingual semantic representation model in this embodiment may support semantic representation of language materials in plural languages, and may be trained based on an enhanced language representation with informative entities (ERNIE) model.

In the training process of this step, a plurality of training language materials in each language may be collected to train the multilingual semantic representation model. In the specific training process, semantic units may be masked randomly and predicted by the multilingual semantic representation model. In the training process in this embodiment, the masked semantic units may be characters, words, entities, phrases, or the like, and each phrase may include at least two words, at least two entities, or a combination of words and entities.

If a character-level masking operation is performed for the training process, a certain character may be masked randomly, and the multilingual semantic representation model is trained to predict the character based on context information thereof. For word-level and entity-level prediction, the words and the entities in the training language materials are first identified using a preset word library and a preset entity library, the words, the entities or the phrases are then masked in the training process, and the multilingual semantic representation model is trained to predict the masked words, entities or phrases based on context information.

The multilingual semantic representation model is trained in the above-mentioned way using the plural language materials in each language, so as to learn the semantic representation capability of each language. Moreover, when the multilingual semantic representation model is trained using the training language materials in each language, the semantic units of various granularities, such as characters, words, entities, phrases, or the like, are required to be randomly masked simultaneously or separately for training, such that the multilingual semantic representation model may fully learn the semantic representation of the semantic units of various granularities in this language.

S102: generating a corresponding mixed-language language material for each of the plurality of training language materials, the mixed-language language material including language materials in at least two languages.

Each language material is represented in one language, for example, the language used for the training language materials is referred to as a first language in this embodiment. A part of the semantic units in each training language material may be represented in a second language different from the first language, and the obtained language material may be called the mixed-language language material due to the mixture of the two languages. It should be noted that the granularity of the semantic units may also be characters, words, entities or phrases.

Further optionally, a part of the semantic units in the mixed-language language material may be represented in a third language different from the first language and the second language, such that the obtained mixed-language language material may include language materials in the first language, the second language and the third language. In a similar fashion, more languages may also be included in the mixed-language language material. However, in order not to affect the overall expression of the mixed-language language material, the mixed-language language material should not include too many language materials in other languages than the first language in this embodiment, for example, the total number may not exceed an overall preset proportion threshold. The preset proportion threshold may be set according to actual requirements, such as 10%, 15%, or other proportion values.

For example, the process of generating the mixed-language language material in this embodiment may be implemented by referring to a translation tool of various languages, for example, a certain semantic unit in the training language material represented in the first language is replaced by the second language translated by the translation tool, so as to generate the corresponding mixed-language language material.

S103: training the multilingual semantic representation model using each mixed-language language material and its corresponding training language material, such that the multilingual semantic representation model learns semantic alignment information of different languages.

In this embodiment, after learning the semantic representation in each language, the multilingual semantic representation model may be trained using each generated mixed-language language material, and in the training process, the multilingual semantic representation model may restore the language materials in other languages than the first language in the mixed-language language materials into the language materials in the first language, such that the multilingual semantic representation model learns the semantic alignment information of different languages.

Semantic alignment in this embodiment means that semantics is similar. The semantic alignment information of different languages represents the language materials which are represented in different languages and have similar semantics. For example, "please" and Chinese " 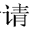 (qing)" are language materials which are aligned semantically; "seat" and Chinese " 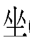 (zuo)" are also language materials which are aligned semantically. In this step, the multilingual semantic representation model is trained using each mixed-language language material and its corresponding training language material, such that the multilingual semantic representation model may learn the semantic alignment information of different languages, for example, may learn that "please" corresponds to Chinese " 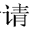 (qing)", and Chinese " 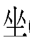 (zuo)" corresponds to "seat". In this training way, the semantic alignment information between various languages, such as Chinese, English, Japanese, Korean, French, Indian, Thai, or the like, may be learned.

The method for training a multilingual semantic representation model according to this embodiment includes: training the multilingual semantic representation model using the plurality of training language materials represented in the plurality of languages respectively, such that the multilingual semantic representation model learns the semantic representation capability of each language; generating the corresponding mixed-language language material for each of the plurality of training language materials, the mixed-language language material including the language materials in at least two languages; and training the multilingual semantic representation model using each mixed-language language material and the corresponding training language material, such that the multilingual semantic representation model learns the semantic alignment information among different languages; then, semantic interaction among different languages may be realized based on the multilingual semantic representation model, with quite high practicability.

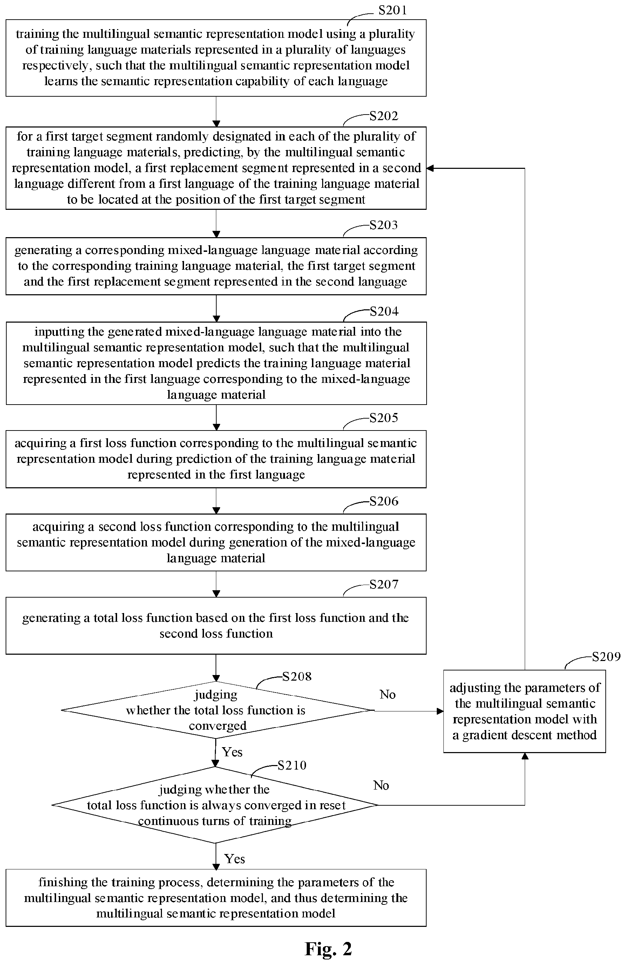

FIG. 2 is a schematic diagram according to a second embodiment of the present disclosure; the technical solution of the method for training a multilingual semantic representation model according to this embodiment of the present disclosure is further described in more detail based on the technical solution of the above-mentioned embodiment shown in Fig. 1. As shown in Fig. 2, the method for training a multilingual semantic representation model according to this embodiment may include the following steps:
S201: training the multilingual semantic representation model using a plurality of training language materials represented in a plurality of languages respectively, such that the multilingual semantic representation model learns the semantic representation capability of each language.

In the specific training process, the training language materials in all languages may be first divided into n groups according to languages, n being the total number of the languages, and the training language materials in all languages being marked as D={d1, d2, ... dn}; for each language, the multilingual semantic representation model may be trained independently by means of separated vocabularies, and after the training process is completed, the model may learn semantic representation vectors of different languages.

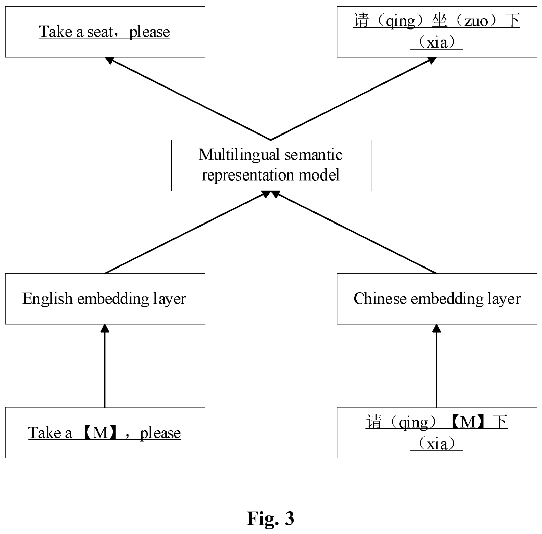

For example, Fig. 3 is a schematic training diagram of this embodiment. As shown in Fig. 3, when the input training language material is in English, an English-side language embedding layer (i.e., English embedding layer) is activated to predict a masked token in the English language material. For example, in Fig. 3, if "seat" in "Take a seat, please" is used as the masked token, the multilingual semantic representation model is trained to predict that the masked token is "seat". When the input training language material is in Chinese, a Chinese-side language embedding layer (i.e., Chinese embedding layer) is activated to predict a masked token in the Chinese language material. For example, in Fig. 3, if " 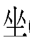 (zuo)" in " 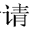 (Qing) 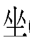 (zuo) 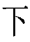 (xia)" is used as the masked token, the multilingual semantic representation model is trained to predict that the masked token is " 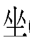 (zuo)". The English embedding layer and the Chinese embedding layer in Fig. 3 are also parts of the structure of the multilingual semantic representation model, and correspondingly, an embedding layer corresponding to each language is present in the multilingual semantic representation model, and in order to clearly indicate that there exists the independent embedding layer for each language in Fig. 3, the Chinese embedding layer and the English embedding layer are shown separately.

With this step, the multilingual semantic representation model may be trained using the plurality of training language materials in each language, so as to learn the semantic representation of each language.

S202: for a first target segment randomly designated in each of the plurality of training language materials, predicting, by the multilingual semantic representation model, a first replacement segment represented in a second language different from a first language of the training language material to be located at the position of the first target segment.

S203: generating a corresponding mixed-language language material according to the corresponding training language material, the first target segment and the first replacement segment represented in the second language.

The steps S202 to S203 are an implementation of the step S102 in the embodiment shown in Fig. 1.

Specifically, since in the step S201, the multilingual semantic representation model has learned the semantic representation of plural languages, the mixed-language language material may be generated using this capability of the multilingual semantic representation model. The mixed-language language material in this embodiment includes at least two languages. For example, when the mixed-language language material is generated, after subjected to embedding representation, the training language material represented in the first language may be input into the multilingual semantic representation model; since having learned the semantic representation capability of various languages, the multilingual semantic representation model may predict the first target segment which is specified randomly, and the first replacement segment represented in another language, such as the second language, a third language, or the like, and then replace the first target segment in the training language material with the first replacement segment, so as to obtain the corresponding mixed-language language material.

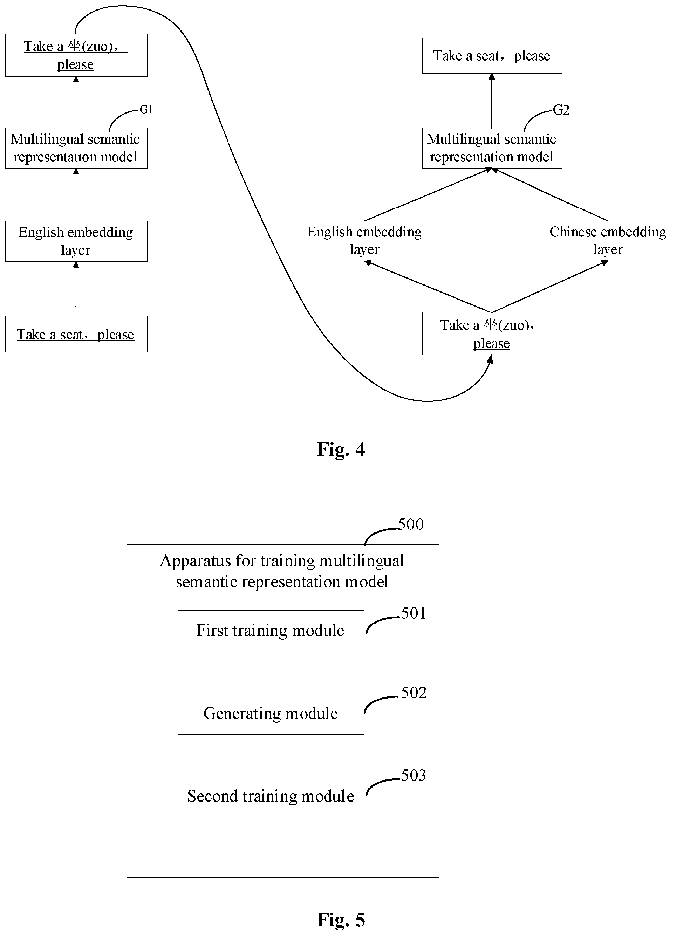

For example, Fig. 4 is another schematic training diagram of this embodiment. The process of generating the mixed-language language material is shown on the left side of Fig. 4, and according to the above-mentioned principle, the mixed-language language material "Take a 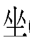 (zuo), please" may be generated based on the training language material "Take a seat, please".

Further, in the above, for example, the mixed-language language material includes the language materials in two languages, and in practical applications, language materials in other languages may continue to be mixed in the mixed-language language material similarly, such that the mixed-language language material which is obtained finally may include language materials in two, three, or more languages. However, in practical applications, in order to guarantee the accuracy of the semantic representation of the original/source training language material, in this embodiment, the mixed language material in the language different from the first language of the training language material has a proportion which does not exceed an overall preset proportion threshold, such as 10%, 15%, or other proportions.

For example, for the plurality of mixed-language language materials obtained in the step S203, the method may further include the following steps:
(a1) for a second target segment randomly designated other than the first replacement segment in the mixed-language language material, predicting, by the multilingual semantic representation model, a second replacement segment represented in a third language different from the first language to be located at the position of the second target segment; and
(b1) updating the mixed-language language material according to the mixed-language language material, the second target segment and the second replacement segment represented in the third language.

The mixing process of the steps (a1) to (b1) has the same implementation principle as the mixing process of the above-mentioned steps S202 to S203, and for details, reference may be made to the description of the above-mentioned embodiment.

Alternatively, in practical applications, the mixed-language language material may be further updated according to the above-mentioned steps (a1) and (b1) until the language material in the languages other than the first language in the mixed-language language material has a proportion reaching the preset proportion threshold. In this way, content of the mixed-language language material may be further enriched.

S204: for the generated mixed-language language material and its coresondng language material, inputting the generated mixed-language language material into the multilingual semantic representation model, such that the multilingual semantic representation model predicts the training language material represented in the first language corresponding to the mixed-language language material.

In the training process of this step, when the mixed-language language material is input into the multilingual semantic representation model, the multilingual semantic representation model predicts and outputs the original/source training language material corresponding to the mixed-language language material, i.e., the training language material represented in the first language, and this process is used to restore the mixed-language language material (to the original/source training language material represented in the first language). With the training process, the multilingual semantic representation model may learn the semantic alignment information among different languages from the mixed-language language material to the training language material. As shown on the right side of Fig. 4, the generated mixed-language language material "Take a 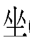 (zuo), please" passes through a Chinese embedding layer and an English embedding layer respectively, and then, the corresponding original/source training language material "Take a seat, please" is restored by the multilingual semantic representation model, such that the multilingual semantic representation model may learn the semantic alignment information between " 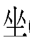 (zuo)" and "seat". According to a similar learning mode, a large number of mixed-language language materials are subjected to a restoration learning process, such that the multilingual semantic representation model may learn a large amount of semantic alignment information among different languages. Similarly, the Chinese embedding layer and the English embedding layer in Fig. 4 are also structures in the multilingual semantic representation model, and are shown in order to show their independent existence.

S205: acquiring a first loss function corresponding to the multilingual semantic representation model during prediction of the training language material represented in the first language.

As shown in Fig. 4, in this embodiment, the mixed-language language material is generated by the multilingual semantic representation model, and meanwhile, the multilingual semantic representation model is trained to learn the semantic alignment information among different languages using the generated mixed-language language material. In this embodiment, the multilingual semantic representation model may be trained while the mixed-language language material is generated. In order to distinguish the multilingual semantic representation models in the two stages, the multilingual semantic representation model used in the stage of generating the mixed-language language material is labeled as G1, and the multilingual semantic representation model used in the stage of learning the semantic alignment information among different languages is labeled as G2. Networks Gland G2 have all shared parameters.

In the training process, every time the step S204 of inputting each mixed-language language material into the multilingual semantic representation model, such that the multilingual semantic representation model predicts the training language material represented in the first language corresponding to the mixed-language language material is adopted, loss functions of the multilingual semantic representation model are required to be calculated. As shown in Fig. 4, the first loss function may correspond to the multilingual semantic representation model G2, i.e., the stage of the step S204. In the back propagation updating gradient, the network parameters of the restored part of the model G2 may be updated using cross entropy, such that the model may better learn alignment relationships among languages. In this embodiment, the cross entropy loss function of G2 may be used as a reward of reinforcement learning, and is denoted as R.

S206: acquiring a second loss function corresponding to the multilingual semantic representation model during generation of the mixed-language language material.

This loss function corresponds to the stage of the step S202 of generating the mixed-language language material, that is, as shown in Fig. 4, corresponds to the multilingual semantic representation model G1.

For example, if the mixed-language language material is generated based on the training language material, the first target segment and the first replacement segment represented in the second language, that is, based on the step S202, an acquisition process of the second loss function may include: acquiring the prediction probability of the first replacement segment predicted by the multilingual semantic representation model; and generating the second loss function corresponding to the multilingual semantic representation model based on the prediction probability of the first replacement segment and the first loss function.

Specifically, in the training process, the network parameters generated by the model Glare updated by a reinforcement learning operation; specifically, the probability of a token predicted by the model G1 may be denoted as P, and the second loss function using reinforcement learning may be denoted as loss=-log (P)^{∗}R, with R being the first loss function; the network parameters of the model G1 are updated with the second loss function, such that the model may generate aligned language materials which are more accurate.

As another example, if the mixed-language language material is updated based on the second target segment and the second replacement segment represented in the third language, that is, updated with the steps (a1) and (b1) based on the step S202, the acquisition process of the second loss function may include the following steps:
(a2) acquiring prediction probabilities of the first replacement segment and the second replacement segment predicted by the multilingual semantic representation model;
(b2) generating a first sub-loss function based on the prediction probability of the first replacement segment and the first loss function;
(c2) generating a second sub-loss function based on the prediction probability of the second replacement segment and the first loss function; and
(d2) taking an average value of the first sub-loss function and the second sub-loss function as the second loss function corresponding to the multilingual semantic representation model.

In the process, for example, two tokens are mixed during generation of the mixed-language language material, and specifically, during generation of the second loss function, the sub-loss functions corresponding to the tokens are required to be calculated respectively, for example, represented by loss=-log (P₁)^{∗}R and loss=-log (P₂)^{∗}R respectively, with P₁ being the prediction probability of the first token, i.e., the first replacement segment, and P₂ being the prediction probability of the second token, i.e., the second replacement segment. Finally, the sub-loss functions of all the tokens are averaged to obtain the second loss function corresponding to the multilingual semantic representation model. In a similar fashion, if n tokens are included in one mixed-language language material, the sub-loss function corresponding to each token may be acquired similarly, and finally, the sub-loss functions corresponding to all the tokens are averaged to obtain the corresponding second loss function.

S207: generating a total loss function based on the first loss function and the second loss function.

For example, the first loss function and the second loss function may be added to obtain the total loss function.

S208: judging whether the total loss function is converged; if not, executing step S209; if yes, executing step S210.

S209: adjusting the parameters of the multilingual semantic representation model with a gradient descent method, returning to the step S202 to continue generating the mixed-language language material, and continuing the training process until the total loss function is converged.

S210: judging whether the total loss function is always converged in preset continuous turns of training, if yes, finishing the training process, determining the parameters of the multilingual semantic representation model, then determining the multilingual semantic representation model, and ending the method; if not, returning to the step S202 to continue generating the mixed-language language material, and continuing the training process.

In this embodiment, the number of the preset continuous turns may be 100, 200, or other numbers set according to actual requirements.

The method for training a multilingual semantic representation model according to this embodiment is applied to the pre-training stage of the multilingual semantic representation model, and with the training method according to this embodiment, the trained multilingual semantic representation model may accurately represent the semantic representation of various languages, and meanwhile learn the semantic alignment information among different languages, so as to enrich the information interaction capability of the multilingual semantic representation model among different languages. The multilingual semantic representation model trained according to this embodiment may be subsequently used for processing semantic tasks of different languages, with wide usage.

With the method for training a multilingual semantic representation model according to this embodiment, in the above-mentioned way, the mixed-language language material may be accurately generated by the multilingual semantic representation model, and unsupervised monolingual language materials may be fully used to construct a large number of supervised task language materials which are aligned bilingually, thereby improving the modeling effect of the multilingual semantic representation model. In addition, in this embodiment, the multilingual semantic representation model may learn the semantic alignment information among different languages based on the generated mixed-language language material, thereby effectively improving the performance of the multilingual semantic representation model, and then realizing the semantic interaction among different languages based on the multilingual semantic representation model, with quite high practicability.

Fig. 5 is a schematic diagram according to a third embodiment of the present disclosure; as shown in Fig. 5, this embodiment provides an apparatus 500 for training a multilingual semantic representation model, including:
a first training module 501 configured for training the multilingual semantic representation model using a plurality of training language materials represented in a plurality of languages respectively, such that the multilingual semantic representation model learns the semantic representation capability of each language;
a generating module 502 configured for generating a corresponding mixed-language language material for each of the plurality of training language materials, the mixed-language language material including language materials in at least two languages; and
a second training module 503 configured for training the multilingual semantic representation model using each mixed-language language material and the corresponding training language material, such that the multilingual semantic representation model learns semantic alignment information of different languages.

The apparatus 500 for training a multilingual semantic representation model according to this embodiment has the same implementation as the above-mentioned relevant method embodiment by adopting the above-mentioned modules to implement the implementation principle and the technical effects of training the multilingual semantic representation model, and for details, reference may be made to the description of the above-mentioned relevant method embodiment, and details are not repeated herein.

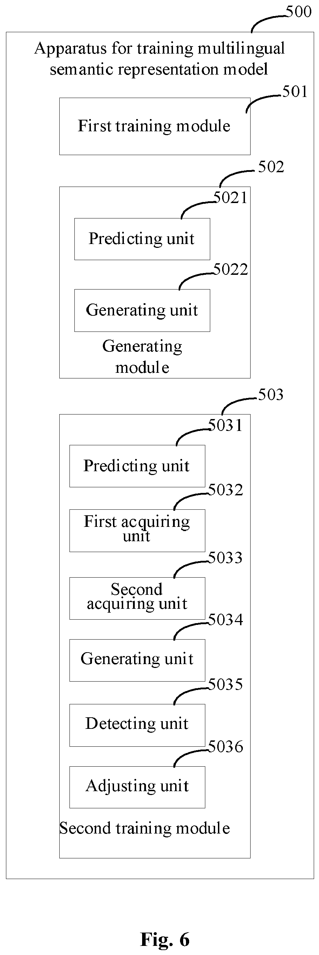

FIG. 6 is a schematic diagram according to a fourth embodiment of the present disclosure; as shown in Fig. 6, the technical solution of the apparatus 500 for training a multilingual semantic representation model according to this embodiment of the present disclosure is further described in more detail based on the technical solution of the above-mentioned embodiment shown in Fig. 5.

As shown in Fig. 6, in the apparatus 500 for training a multilingual semantic representation model according to this embodiment, the generating module 502 includes:
a predicting unit 5021 configured for, for a first target segment randomly designated in each of the plurality of training language materials, predicting, by the multilingual semantic representation model, a first replacement segment represented in a second language different from a first language of the training language material to be located at the position of the first target segment; and
a generating unit 5022 configured for generating a mixed-language language material according to the training language material, the first target segment and the first replacement segment represented in the second language.

Further optionally, the predicting unit 5021 is further configured for, for a second target segment randomly designated other than the first replacement segment in the mixed-language language material, predicting, by the multilingual semantic representation model, a second replacement segment represented in a third language different from the first language to be located at the position of the second target segment.

The generating unit 5022 is further configured for updating the mixed-language language material according to the mixed-language language material, the second target segment and the second replacement segment represented in the third language.

Further optionally, as shown in Fig. 6, in the apparatus 500 for training a multilingual semantic representation model according to this embodiment, the second training module 503 includes:
a predicting unit 5031 configured for inputting each mixed-language language material into the multilingual semantic representation model, such that the multilingual semantic representation model predicts the training language material represented in the first language corresponding to the mixed-language language material;
a first acquiring unit 5032 configured for acquiring a first loss function corresponding to the multilingual semantic representation model during prediction of the training language material represented in the first language;
a second acquiring unit 5033 configured for acquiring a second loss function corresponding to the multilingual semantic representation model during generation of the mixed-language language material;
a generating unit 5034 configured for generating a total loss function based on the first loss function and the second loss function;
a detecting unit 5035 configured for judging whether the total loss function is converged; and
an adjusting unit 5036 configured for, if the total loss function is not converged, adjusting the parameters of the multilingual semantic representation model with a gradient descent method, and continuing the training process with the mixed-language language materials until the total loss function is converged.

Further optionally, the second acquiring unit 5033 is configured for:
if the mixed-language language material is generated based on the training language material, the first target segment and the first replacement segment represented in the second language, acquiring the prediction probability of the first replacement segment predicted by the multilingual semantic representation model; and
generating the second loss function corresponding to the multilingual semantic representation model based on the prediction probability of the first replacement segment and the first loss function.

Further optionally, the second acquiring unit 5033 is configured for:
if the mixed-language language material is updated based on the second target segment and the second replacement segment represented in the third language, acquiring prediction probabilities of the first replacement segment and the second replacement segment predicted by the multilingual semantic representation model;
generating a first sub-loss function based on the prediction probability of the first replacement segment and the first loss function;
generating a second sub-loss function based on the prediction probability of the second replacement segment and the first loss function; and
taking an average value of the first sub-loss function and the second sub-loss function as the second loss function corresponding to the multilingual semantic representation model.

The apparatus 500 for training a multilingual semantic representation model according to this embodiment has the same implementation as the above-mentioned relevant method embodiment by adopting the above-mentioned modules to implement the implementation principle and the technical effects of training the multilingual semantic representation model, and for details, reference may be made to the description of the above-mentioned relevant method embodiment, and details are not repeated herein.

According to an embodiment of the present disclosure, there are also provided an electronic device, a readable storage medium and a computer program product.

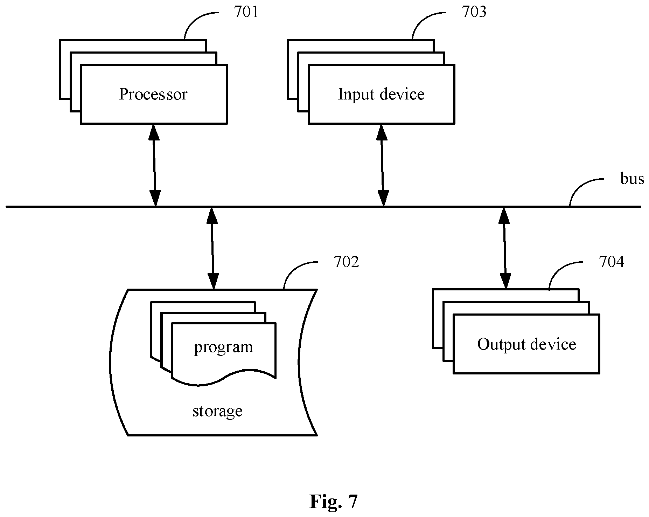

Fig. 7 is a block diagram of an electronic device configured to implement the above-mentioned method according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present disclosure described and/or claimed herein.

As shown in Fig. 7, the electronic device includes one or more processors 701, a memory 702, and interfaces configured to connect the components, including high-speed interfaces and low-speed interfaces. The components are interconnected using different buses and may be mounted at a common motherboard or in other manners as desired. The processor may process instructions for execution within the electronic device, including instructions stored in or at the memory to display graphical information for a GUI at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multi-processor system). In Fig. 7, one processor 701 is taken as an example.

The memory 702 is configured as the non-transitory computer readable storage medium according to the present disclosure. The memory stores instructions, which, when executed by the at least one processor, cause the at least one processor to perform a method for training a multilingual semantic representation model according to the present disclosure. The non-transitory computer readable storage medium according to the present disclosure stores computer instructions for causing a computer to perform the method for training a multilingual semantic representation model according to the present disclosure.

The memory 702 which is a non-transitory computer readable storage medium may be configured to store non-transitory software programs, non-transitory computer executable programs and modules, such as program instructions/modules corresponding to the method for training a multilingual semantic representation model according to the embodiments of the present disclosure (for example, the relevant modules shown in Figs. 4 and 5). The processor 701 executes various functional applications and data processing of a server, that is, implements the method for training a multilingual semantic representation model according to the above-mentioned embodiments, by running the non-transitory software programs, instructions, and modules stored in the memory 702.

The memory 702 may include a program storage area and a data storage area, herein the program storage area may store an operating system and an application program required for at least one function; the data storage area may store data created according to use of the electronic device for implementing the method for training a multilingual semantic representation model, or the like. Furthermore, the memory 702 may include a high-speed random access memory, or a non-transitory memory, such as at least one magnetic disk storage device, a flash memory device, or other non-transitory solid state storage devices. In some embodiments, optionally, the memory 702 may include memories remote from the processor 701, and such remote memories may be connected via a network to the electronic device for implementing the method for training a multilingual semantic representation model. Examples of such a network include, but are not limited to, the Internet, intranets, local area networks, mobile communication networks, and combinations thereof.

The electronic device for the method for training a multilingual semantic representation model may further include an input device 703 and an output device 704. The processor 701, the memory 702, the input device 703 and the output device 704 may be connected by a bus or other means, and Fig. 7 takes the connection by a bus as an example.

The input device 703 may receive input numeric or character information and generate key signal input related to user settings and function control of the electronic device for implementing the method for training a multilingual semantic representation model, such as a touch screen, a keypad, a mouse, a track pad, a touch pad, a pointing stick, one or more mouse buttons, a trackball, a joystick, or the like. The output device 704 may include a display device, an auxiliary lighting device (for example, an LED) and a tactile feedback device (for example, a vibrating motor), or the like. The display device may include, but is not limited to, a liquid crystal display (LCD), a light emitting diode (LED) display, and a plasma display. In some implementations, the display device may be a touch screen.

Various implementations of the systems and technologies described here may be implemented in digital electronic circuitry, integrated circuitry, application specific integrated circuits (ASIC), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices (PLD)) for providing machine instructions and/or data for a programmable processor, including a machine readable medium which receives machine instructions as a machine readable signal. The term "machine readable signal" refers to any signal for providing machine instructions and/or data for a programmable processor.

To provide interaction with a user, the systems and technologies described here may be implemented on a computer having: a display device (for example, a cathode ray tube (CRT) or liquid crystal display (LCD) monitor) for displaying information to a user; and a keyboard and a pointing device (for example, a mouse or a trackball) by which a user may provide input for the computer. Other kinds of devices may also be used to provide interaction with a user; for example, feedback provided for a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN), the Internet and a blockchain network.

A computer system may include a client and a server. Generally, the client and the server are remote from each other and interact through the communication network. The relationship between the client and the server is generated by virtue of computer programs which run on respective computers and have a client-server relationship to each other.

The technical solution according to the embodiment of the present disclosure includes: training the multilingual semantic representation model using the plurality of training language materials represented in the plurality of languages respectively, such that the multilingual semantic representation model learns the semantic representation capability of each language; generating the corresponding mixed-language language material for each of the plurality of training language materials, the mixed-language language material including the language materials in at least two languages; and training the multilingual semantic representation model using each mixed-language language material and the corresponding training language material, such that the multilingual semantic representation model learns the semantic alignment information among different languages; then, the semantic interaction among different languages may be realized based on the multilingual semantic representation model, with quite high practicability.

With the technical solution according to the embodiment of the present disclosure, in the above-mentioned way, the mixed-language language material may be accurately generated by the multilingual semantic representation model, and unsupervised monolingual language materials may be fully used to construct a large number of supervised task language materials which are aligned bilingually, thereby improving the modeling effect of the multilingual semantic representation model. In addition, in this embodiment, the multilingual semantic representation model may learn the semantic alignment information among different languages based on the generated mixed-language language material, thereby effectively improving the performance of the multilingual semantic representation model, and then realizing the semantic interaction among different languages based on the multilingual semantic representation model, with quite high practicability.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

## Claims

1. A method for training a multilingual semantic representation model, comprising:
training (S101, S201) the multilingual semantic representation model using a plurality of training language materials represented in a plurality of languages respectively, such that the multilingual semantic representation model learns the semantic representation capability of each language;
generating (S102) a corresponding mixed-language language material for each of the plurality of training language materials, the mixed-language language material comprising language materials in at least two languages; and
training (S103) the multilingual semantic representation model using each mixed-language language material and its corresponding training language material, such that the multilingual semantic representation model learns semantic alignment information of different languages.

2. The method according to claim 1, wherein the generating (S102) the corresponding mixed-language language material for each of the plurality of training language materials comprises:
for a first target segment randomly designated in each of the plurality of training language materials, predicting (S202), by the multilingual semantic representation model, a first replacement segment represented in a second language different from a first language of the training language material to be located at the position of the first target segment; and
generating (S203) the mixed-language language material according to the training language material, the first target segment and the first replacement segment represented in the second language.

3. The method according to claim 2, further comprising: after generating (S203) the mixed-language language material according to the training language material, the first target segment and the first replacement segment represented in the second language,
for a second target segment randomly designated other than the first replacement segment in the mixed-language language material, predicting, by the multilingual semantic representation model, a second replacement segment represented in a third language different from the first language to be located at the position of the second target segment; and
updating the mixed-language language material according to the mixed-language language material, the second target segment and the second replacement segment represented in the third language.

4. The method according to claim 2 or 3, wherein the training (S103) the multilingual semantic representation model using each mixed-language language material and its corresponding training language material, such that the multilingual semantic representation model learns semantic alignment information of different languages comprises:
inputting (S204) each mixed-language language material into the multilingual semantic representation model, such that the multilingual semantic representation model predicts the training language material represented in the first language corresponding to the mixed-language language material;
acquiring (S205) a first loss function corresponding to the multilingual semantic representation model during prediction of the training language material represented in the first language;
acquiring (S206) a second loss function corresponding to the multilingual semantic representation model during generation of the mixed-language language material;
generating (S207) a total loss function based on the first loss function and the second loss function;
judging (S208) whether the total loss function is converged; and
if the total loss function is not converged, adjusting (S209) the parameters of the multilingual semantic representation model with a gradient descent method, and continuing the training process with the mixed-language language materials until the total loss function is converged.

5. The method according to claim 4, wherein the acquiring (S206) the second loss function corresponding to the multilingual semantic representation model during generation of the mixed-language language material comprises:
if the mixed-language language material is generated based on the training language material, the first target segment and the first replacement segment represented in the second language, acquiring the prediction probability of the first replacement segment predicted by the multilingual semantic representation model; and
generating the second loss function corresponding to the multilingual semantic representation model based on the prediction probability of the first replacement segment and the first loss function.

6. The method according to claim 4, wherein the acquiring (S206) the second loss function corresponding to the multilingual semantic representation model during generation of the mixed-language language material comprises:
if the mixed-language language material is updated based on the second target segment and the second replacement segment represented in the third language, acquiring prediction probabilities of the first replacement segment and the second replacement segment respectively predicted by the multilingual semantic representation model;
generating a first sub-loss function based on the prediction probability of the first replacement segment and the first loss function;
generating a second sub-loss function based on the prediction probability of the second replacement segment and the first loss function; and
taking an average value of the first sub-loss function and the second sub-loss function as the second loss function corresponding to the multilingual semantic representation model.

7. An apparatus for training a multilingual semantic representation model, comprising:
means for training (S101, S201) the multilingual semantic representation model using a plurality of training language materials represented in a plurality of languages respectively, such that the multilingual semantic representation model learns the semantic representation capability of each language;
means for generating (S102) a corresponding mixed-language language material for each of the plurality of training language materials, the mixed-language language material comprising language materials in at least two languages; and
means for training (S103) the multilingual semantic representation model using each mixed-language language material and its corresponding training language material, such that the multilingual semantic representation model learns semantic alignment information of different languages.

8. The apparatus according to claim 7, wherein the means for generating (S102) the corresponding mixed-language language material comprises:
means for, for a first target segment randomly designated in each of the plurality of training language materials, predicting (S202), by the multilingual semantic representation model, a first replacement segment represented in a second language different from a first language of the training language material to be located at the position of the first target segment; and
means for generating (S203) the mixed-language language material according to the training language material, the first target segment and the first replacement segment represented in the second language.

9. The apparatus according to claim 8, wherein the means for generating the corresponding mixed-language language material further comprises:
means for, for a second target segment randomly designated other than the first replacement segment in the mixed-language language material, predicting, by the multilingual semantic representation model, a second replacement segment represented in a third language different from the first language to be located at the position of the second target segment; and
means for updating the mixed-language language material according to the mixed-language language material, the second target segment and the second replacement segment represented in the third language.

10. The apparatus according to claim 8 or 9, wherein the means for training (S103) the multilingual semantic representation model using each mixed-language language material and its corresponding training language material comprises comprises:
means for inputting (S204) each mixed-language language material into the multilingual semantic representation model, such that the multilingual semantic representation model predicts the training language material represented in the first language corresponding to the mixed-language language material;
means for acquiring (S205) a first loss function corresponding to the multilingual semantic representation model during prediction of the training language material represented in the first language;
means for acquiring (S206) a second loss function corresponding to the multilingual semantic representation model during generation of the mixed-language language material;
means for generating (S207) a total loss function based on the first loss function and the second loss function;
means for judging (S208) whether the total loss function is converged; and
means for, if the total loss function is not converged, adjusting (S209) the parameters of the multilingual semantic representation model with a gradient descent method, and continuing the training process with the mixed-language language materials until the total loss function is converged.

11. The apparatus according to claim 10, wherein the means for acquiring (S206) the second loss function comprises:
means for, if the mixed-language language material is generated based on the training language material, the first target segment and the first replacement segment represented in the second language, acquiring the prediction probability of the first replacement segment predicted by the multilingual semantic representation model; and
means for generating the second loss function corresponding to the multilingual semantic representation model based on the prediction probability of the first replacement segment and the first loss function.

12. The apparatus according to claim 10, wherein the means for acquiring (S206) the second loss function comprises:
means for, if the mixed-language language material is updated based on the second target segment and the second replacement segment represented in the third language, acquiring prediction probabilities of the first replacement segment and the second replacement segment respectively predicted by the multilingual semantic representation model;
means for generating a first sub-loss function based on the prediction probability of the first replacement segment and the first loss function;
means for generating a second sub-loss function based on the prediction probability of the second replacement segment and the first loss function; and
means for taking an average value of the first sub-loss function and the second sub-loss function as the second loss function corresponding to the multilingual semantic representation model.

13. An electronic device, comprising:
at least one processor; and
a memory connected with the at least one processor communicatively;
wherein the memory stores instructions executable by the at least one processor to enable the at least one processor to carry out the method according to any one of claims 1 to 6.

14. A non-transitory computer readable storage medium comprising instructions, which, when executed by a computer, cause the computer to carry out the method according to any one of claims 1 to 6.

15. A computer program product comprising instructions which, when the program is executed by a computer, cause the computer to carry out the method according to any one of claims 1 to 6.
